**Europäisches Patentamt**

**European Patent Office**

**Office européen des brevets**

(19)

(11) Veröffentlichungsnummer: **0 054 777**
**B1**

(12) # EUROPÄISCHE PATENTSCHRIFT

(45) Veröffentlichungstag der Patentschrift:
**31.07.85**

(51) Int. Cl.⁴: **B 01 J 39/22,** C 02 F 1/42

(21) Anmeldenummer: **81110094.0**

(22) Anmeldetag: **03.12.81**

(54) **Verfahren zur Herstellung eines Kationenaustauschers und dessen Verwendung.**

(30) Priorität: **20.12.80 DE 3048356**

(43) Veröffentlichungstag der Anmeldung:
**30.06.82 Patentblatt 82/26**

(45) Bekanntmachung des Hinweises auf die Patenterteilung:
**31.07.85 Patentblatt 85/31**

(84) Benannte Vertragsstaaten:
**AT BE CH DE FR GB IT LI NL SE**

(56) Entgegenhaltungen:
**DE - A - 2 159 863**
**FR - A - 899 188**
**FR - A - 2 219 909**
**US - A - 2 312 449**
**US - A - 3 944 415**

(73) Patentinhaber: **Jörgensen, S.E., Prof., Langkaer vaenge 9, DK-3500 Vaerlöse (DK)**

(72) Erfinder: **Jörgensen, S.E., Prof., Langkaer vaenge 9, DK-3500 Vaerlöse (DK)**

(74) Vertreter: **Weber, Dieter, Dr. et al, Dr. Dieter Weber und Klaus Seiffert Patentanwälte Gustav-Freytag-Strasse 25 Postfach 6145, D-6200 Wiesbaden 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Herstellung eines Kationenaustauschers, der insbesondere zur Reinigung von Abwasser geeignet ist.

Die Reinigung von Haushalts- und Industrieabwässern stellt ein zunehmend wachsendes Problem dar, da die Forderungen hinsichtlich der Reinheit von an Vorfluter abgegebenen Abwässern ständig gesteigert werden. Problematisch sind insbesondere solche Abwässer, die biologisch nicht abbaubare oder die Mikroorganismen von Belebtschlammverfahren vergiftende Bestandteile enthalten. Praktische Bedeutung in der Abwasserklärung haben nur solche Verfahren, die eine gute Effektivität besitzen und mit relativ geringen Kosten durchgeführt werden können. Mittel zur Abwasserklärung müssen daher zu möglichst geringen Gestehungspreisen herstellbar sein.

Je nach der Provenienz der Abwässer enthalten diese zumeist hauptsächlich hochmolekulare Proteine, niedermolekulare Polypeptide und Aminosäuren, Lipoide und Zucker. In Industrieabwässern, wie solchen aus Galvanisierungsbetrieben, können zusätzlich auch Metallkationen enthalten sein.

Zur Entfernung stickstoffhaltiger Stoffe aus Abwässern wurden bisher speziell Koagulationsverfahren angewendet, bei denen dem Abwasser Stoffe zugesetzt werden, die in der Lage sind, mit den Verunreinigungen Ausflockungen zu bilden, die sich bei der Nachklärung absetzen und so von dem Wasser abgetrennt werden können. Beispiele solcher Ausflockungsmittel sind Ligninsulfonsäure und Dodecylbenzolsulfonsäure. Diese sind in der Lage, hochmolekulare Proteine, nicht jedoch niedermolekulare stickstoffhaltige Verbindungen, wie Polypeptide und Aminosäuren, auszuflocken. Insbesondere gewerbliche Abwässer, wie von Fischfabriken und Schlachthöfen, lassen sich daher mit solchen Ausflockungsmitteln nicht ausreichend klären, um an Vorfluter abgegeben werden zu dürfen.

Es ist auch bereits bekannt, Abwasser mit Hilfe von Ionenaustauschern zu reinigen, doch haben sich diese Verfahren bisher nicht als wirtschaftlich tragbar erwiesen. Bekannte Ionenaustauscher auf Cellulosebasis bestanden aus durch Umsetzung von Cellulose mit SO₃ gewonnenen Cellulosesulfatestern sowie aus Cellulosephosphatestern. Die Herstellung solcher Ionenaustauscher ist aber zu aufwendig, um die Erzeugnisse für die Abwasserreinigung einsetzen zu können.

Die der Erfindung zugrunde liegende Aufgabe bestand darin, ein Verfahren zur Herstellung von Kationenaustauschern zu bekommen, die gute Effektivität bei der Abwasserreinigung besitzen und möglichst billig herstellbar sind. Insbesondere sollten diese Ionenaustauscher gleichzeitig in der Lage sein, Proteine und andere Stickstoffverbindungen wie auch Schwermetallkationen zu entfernen. Schließlich sollen die Ionenaustauscher auch regenerierbar sein, um das Beseitigungsproblem bezüglich der verbrauchten Ionenaustauscher auf ein Minimum herabzusetzen. Diese Aufgabe wird mit dem erfindungsgemäßen Verfahren gelöst.

Das Verfahren zur Herstellung eines Kationenaustauschers nach der Erfindung ist dadurch gekennzeichnet, daß man zerkleinerte Baumrinde zunächst mit wenigstens 5gewichtsprozentiger Alkalilauge behandelt, sodann mit Wasser wäscht, anschließend mit 30- bis 75gewichtsprozentiger Schwefelsäure behandelt und schließlich erneut mit Wasser wäscht.

Ein solches Verfahren ist wenig aufwendig, was die Ausgangsstoffe und die Verfahrenstechnik betrifft, und die Verfahrensprodukte sind überraschenderweise äußerst gut geeignet, sowohl Proteine und andere stickstoffhaltige Verbindungen als auch Schwermetalle aus Abwässern zu entfernen.

Bei der Behandlung der zerkleinerten Baumrinde mit der Alkalilauge bzw. Schwefelsäure genügt es, insbesondere bei kleineren Ansätzen, die Baumrinde in dem betreffenden Reagenz stehenzulassen, wobei in diesem Fall eine solche Menge an Alkalilauge bzw. Schwefelsäure zu verwenden ist, daß diese die zerkleinerte Baumrinde vollständig bedeckt. Insbesondere bei größeren Ansätzen wird es aber zweckmäßig sein, bei der Behandlung in wenigstens einer der beiden Stufen die zerkleinerte Baumrinde mit dem Reagenz, der Alkalilauge bzw. Schwefelsäure, durchzuführen.

Die Umsetzung kann in beiden Stufen bei Umgebungstemperatur erfolgen, obwohl zur Beschleunigung der Umsetzung selbstverständlich auch das Reaktionsgemisch erwärmt werden kann, wie beispielsweise auf eine Temperatur zwischen Umgebungstemperatur und 90° C, sofern bei Normaldruck gearbeitet wird. Es ist jedoch auch vorstellbar, in Druckgefäßen bei Überdruck und dann auch bei höheren Temperaturen zu arbeiten, wobei jedoch darauf geachtet werden muß, daß bei der Behandlung nicht zu viel Cellulose in Lösung geht.

Die Behandlungszeiten hängen von den Reaktionsbedingungen ab, wobei man verständlicherweise die längsten Behandlungszeiten benötigt, wenn man die Baumrinde bei Umgebungstemperatur einfach in dem Reagenz ruhig stehen läßt. Gewöhnlich liegen die Behandlungszeiten mit der Alkalilauge bei 0,5 bis 20, vorzugsweise bei 3 bis 10 Stunden, diejenigen mit der Schwefelsäure bei 0,5 bis 8, vorzugsweise bei 1 bis 6 Stunden.

Bei der auf jede Stufe folgenden Waschstufe braucht nicht bis zur vollständigen Entfernung von Lauge bzw. Säure gewaschen zu werden. Bei der Waschstufe, die auf die Behandlung mit der Alkalilauge folgt, genügt es, bis zu einem pH-Wert unter 9 zu waschen. Bei der Waschstufe, die auf die Schwefelsäurebehandlung folgt, ist es zweckmäßig, bis zu einem pH-Wert über 3, vorzugsweise über 4 zu waschen.

Die Konzentrationen der Behandlungsmittel lassen sich in Abhängigkeit von den übrigen Behandlungsbedingungen, wie Temperatur und Behandlungszeit, variieren. Insbesondere bei der Schwefelsäurebehandlung ist jedoch darauf zu achten, daß nicht zu viel Cellulose in Lösung geht und damit dem Verfahrensprodukt entzogen wird. Im Hinblick hierauf ist es zweckmäßig, für die zweite Behandlungsstufe eine 40- bis 70gewichtsprozentige, vorzugsweise eine 50- bis 65gewichtsprozentige Schwefelsäure zu verwenden. Bei Umgebungstemperatur beträgt bei Verwendung 50%iger Schwefelsäure die Behandlungszeit beispielsweise etwa 1 Stunde, wobei die Behandlungszeit aber wiederum auch abhängig von der Provenienz der verwendeten Baumrinde ist. So kann es zweckmäßig sein, selbst bei Verwendung einer 65%igen Schwefelsäure die Behandlungszeit auf 4 Stunden einzustellen, ohne daß unerwünscht viel Cellulose in Lösung geht.

Der bevorzugte Konzentrationsbereich der Alkalilauge liegt bei 20 bis 40 Gewichts-%. Da das Verfahren wirtschaftlich durchführbar sein muß, kommen als Alkalilauge bevorzugt Natronlauge und Kalilauge, besonders Natronlauge in Betracht, da die übrigen Alkalilaugen im Gestehungspreis zu teuer sind.

Grundsätzlich kann man für das beanspruchte Verfahren jede Baumrinde oder Borke verwenden, wobei sich als besonders vorteilhaft aber Nadelholzrinde, insbesondere Kiefernrinde, erwies. Rinde fällt bei der Holzwirtschaft in relativ großen Mengen an, ohne daß wesentliche Verwertungsmöglichkeiten bekannt sind. Das vorliegende Verfahren stellt somit eine gute Verwertung eines an sich mehr oder weniger wertlosen Abfallproduktes dar.

Die Teilchengröße der Rinde ist von Bedeutung für die Verwertung des Ionenaustauschers, da zu kleine Teilchengrößen leicht ein Verstopfen der Ionenaustauschersäule ergeben können, während zu große Teilchengrößen zu geringe zugängliche Oberfläche besitzen. Daher ist es zweckmäßig, in dem erfindungsgemäßen Verfahren die Baumrinde auf eine Teilchengröße mit einem mittleren Durchmesser von 0,5 bis 5, vorzugsweise von 1 bis 3 mm zu zerkleinern.

Die erfindungsgemäß hergestellten Kationenaustauscher sind durch Behandlung mit Alkalilauge, insbesondere Natronlauge, regenerierbar und daher wiederholt verwendbar, was die Wirtschaftlichkeit ihrer Verwendung, etwa bei der Abwasserreinigung, erhöht.

Durch das Eluieren des verbrauchten Ionenaustauschers mit Alkalilauge, wie wenigstens 0,5 M Natronlauge, werden die Proteine extrahiert. Schwermetallkationen werden zweckmäßig zusätzlich mit Schwefelsäure, wie 0,5 M $H_2SO_4$, ausgetauscht.

Bei Verwendung der dreifachen Volumenmenge, bezogen auf das Ionenaustauschervolumen, an 0,5 M Natriumhydroxid lassen sich 96% der aufgenommenen Proteine, bei Verwendung der entsprechenden Menge von 1 M Natronlauge fast 100% der aufgenommenen Proteine entfernen. Selbst bei Verwendung des zweifachen Volumens an 0,5 M Natronlauge lassen sich noch 92% der Proteine entfernen.

Ca. 25% der Ionenaustauscherkapazität dürften auf die schwefelhaltigen stark sauren Gruppen, wie saure Sulfatestergruppen oder Sulfonsäuregruppen, zurückzuführen sein, während die restlichen 75% der Ionenaustauschkapazität auf Carboxylgruppen oder Hydroxylgruppen zurückzuführen sein dürften, die in der Hauptsache an Ligninsubstanzen gebunden sind. Die Ionenaustauscher nach der Erfindung haben eine hohe Selektivität für alle Schwermetalle, wie $Cu^{2+}$, $Cr^{3+}$, $Ni^{2+}$, $Cd^{2+}$, $Ag^{2+}$, $Sn^{2+}$, $Hg^+$ und $Hg^{2+}$. Die Selektivitäten liegen in der Größenordnung von 50 bis 75% der Kapazität, die den Carboxylgruppen und Hydroxylgruppen zuzuschreiben ist.

Die Aufnahmeeffektivität bezüglich Aminosäuren, die unterschiedliche isoelektrische Punkte haben, ist pH-abhängig, so daß je nach der Provenienz des Abwassers es zweckmäßig sein kann, den pH-Wert in Abhängigkeit von dem isoelektrischen Punkt der hauptsächlich vorkommenden Proteine nachzustellen. Auch die Geschwindigkeit der Proteinaufnahme ist pH-abhängig.


Beispiel

Kiefernborke wurde mit Hilfe einer Schneidmaschine auf eine Teilchengröße von 0,5 bis 3 mm zerkleinert. Die zerkleinerte Borke wurde in einem Reaktionsbehälter mit 2 M Natronlauge begossen, bis die gesamte Borke bedeckt war. Das Reaktionsgemisch ließ man 7 Stunden stehen. Sodann wurde die Natronlauge abgelassen, und die behandelte Borke wurde mit Wasser bis zu einem pH-Wert von 9 gewaschen. Sodann wurde sie mit 65%iger Schwefelsäure bedeckt und 4 Stunden stehen gelassen. Sodann wurde die Schwefelsäure abgelassen und das feste Reaktionsprodukt mehrmals mit Leitungswasser gewaschen, bis der pH-Wert über 4 lag. Damit war der Ionenaustauscher fertig für die Verwendung.

Zur Prüfung seiner Brauchbarkeit für die Abwasserreinigung wurde er zunächst zur Reinigung eines kupferhaltigen Abwassers aus der elektrotechnischen Industrie verwendet.

40 g Ionenaustauscher wurden in eine Glassäule mit 2 cm Durchmesser gegeben, so daß das Feuchtvolumen 150 ml betrug.

Der pH-Wert des kupferhaltigen Abwassers lag bei 5,2. Die $Cu^{2+}$-Konzentration in dem behandelten Abwasser wurde jeweils für $1^1/_4$ l Auslauf der Säule bestimmt. Dies entsprach einer pH-Wertbestimmung jede Stunde.

In den ersten 15 l des Auslaufes der Ionenaustauschersäule war die Konzentration der Kupferionen geringer als 0,1 mg/l. In den nächsten 15 l stieg die Konzentration auf etwa 0,2 mg/l. Die folgenden 15 l

hatten eine Konzentration von 1 mg/l. Die Behandlung wurde nach 60 l unterbrochen, die Gesamtanalyse der kombinierten Proben ist in der nachfolgenden Tabelle I gezeigt.

Tabelle I
$Cu^{2+}$-Analysen des Abwassers vor und nach der Behandlung

|  | Vor der Behandlung | Nach der Behandlung |
|---|---|---|
| $Cu^{2+}$ (mg/l) | 12 | 0,42 |
| $KMnO_4$-Zahl (mg/l) | 186 | 114 |
| Suspendierte Stoffe (mg/l) | 960 | 875 |
| Glührückstand (mg/l) | 720 | 680 |

Die Kapazität des Ionenaustauschers bleibt bei 652 mg oder 0,51 Milliäquivalenten je Gramm, was den ionischen Gruppen entspricht, die für Kupferaufnahme selektiv sind. Anschließend wurde der Ionenaustauscher mit dem zweifachen Volumen 1 M Schwefelsäure eluiert. 96% der aufgenommenen Kupferionen wurden dabei von dem Ionenaustauscher entfernt. Spülen des Ionenaustauschers mit dem vierfachen Volumen, bezogen auf das Volumen der Ionenaustauscherschicht mit Wasser ergab eine Freisetzung von weiteren 3% Kupferionen.

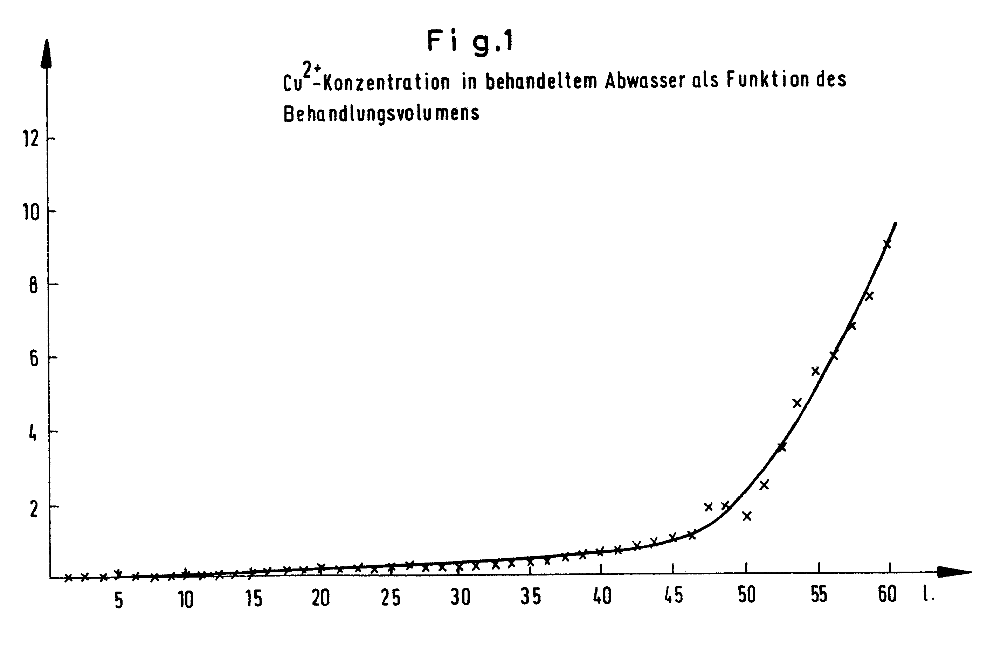

Die Reinigungswirkung dieses Versuches ergibt sich auch aus Fig. 1 der beiliegenden Zeichnung, in der die $Cu^{2+}$-Konzentration in dem ablaufenden Abwasser graphisch dargestellt ist.

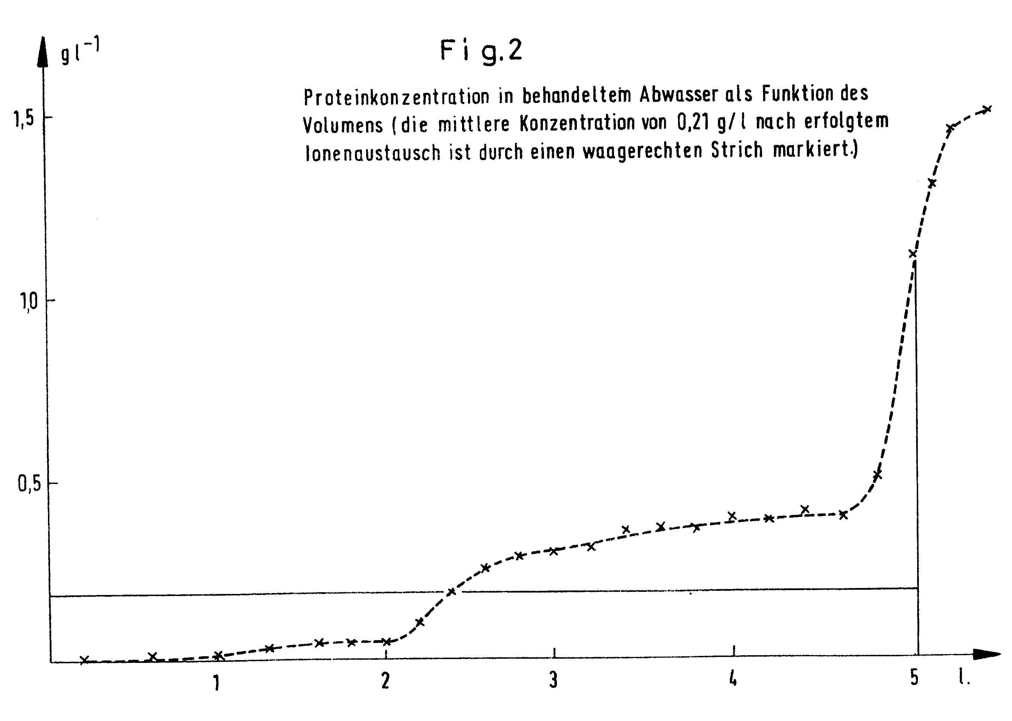

In einem weiteren Versuch wurde ein Schlachthausabwasser gereinigt, das eine relativ hohe Proteinkonzentration enthielt. Der pH-Wert des rohen Abwassers wurde auf 4,6 eingestellt, und die durch Ausfällung bei diesem pH-Wert entfernbaren Proteine wurden durch Absitzenlassen entfernt. Sodann wurde das Abwasser filtriert und nun der Ionenaustauscherbehandlung unterzogen. 100 g des obigen Ionenaustauschers (300 ml unter feuchten Bedingungen) wurden in eine Säule mit einer Höhe von 42 cm eingefüllt. Eine Fließgeschwindigkeit des Abwassers von 20 ml/Min. und Quadratzentimeter wurde angewendet. Die Proteinkonzentration in dem ablaufenden Abwasser wurde bestimmt und ergibt sich aus der Fig. 2 der Zeichnung.

Nachdem 5,2 l die Ionenaustauschersäule passiert hatten, wurde das Material unter Verwendung von 1 M Natronlauge eluiert. Bei Verwendung des doppelten Volumens an Natronlauge, bezogen auf das Volumen der Ionenaustauscherschicht, wurde beobachtet, daß 96% der aufgenommenen Proteine wieder freigesetzt wurden. Anschließend wurde mit dem 5fachen Volumen, bezogen auf das Volumen der Ionenaustauscherschicht, Wasser gewaschen, wobei weitere 2,5% der aufgenommenen Proteine ausgewaschen wurden.

In der nachfolgenden Tabelle II sind die Analysen für den Gesamtdurchlauf von 5,2 l aufgeführt.

Tabelle II
Proteinanalyse für Schlachthausabwasser vor und nach der Behandlung

|  | Nach Proteinausfällung | Filtriert (pH = 4,6) | Nach Ionenaustausch |
|---|---|---|---|
| Proteinkonzentration (g/l) | 2,62 | 1,29 | 0,21 |
| $KMnO_4$-Zahl (g/l) | 3400 | 1900 | 650 |

**Patentansprüche**

1. Verfahren zur Herstellung eines Kationenaustauschers, insbesondere für die Abwasserbehandlung, dadurch gekennzeichnet, daß man zerkleinerte Baumrinde zunächst mit wenigstens 5gewichtsprozentiger Alkalilauge behandelt, sodann mit Wasser wäscht, anschließend mit 30- bis 75gewichtsprozentiger Schwefelsäure behandelt und schließlich erneut mit Wasser wäscht.

2. Verfahren nach Anspruch 1, dadurch gekennzeichnet, daß man jeweils mit einer die zerkleinerte Baumrinde bedeckenden Menge der Alkalilauge bzw. Schwefelsäure behandelt.

3. Verfahren nach Anspruch 1 und 2, dadurch gekennzeichnet, daß man mit der Alkalilauge 0,5 bis 20, vorzugsweise 3 bis 10 Stunden behandelt.

4. Verfahren nach Anspruch 1 bis 3, dadurch gekennzeichnet, daß man mit der Schwefelsäure 0,5 bis 8, vorzugsweise 1 bis 6 Stunden behandelt.

5. Verfahren nach Anspruch 1 bis 4, dadurch gekennzeichnet, daß man nach der Behandlung mit Alkalilauge bis zu einem pH-Wert unter 9 wäscht.

6. Verfahren nach Anspruch 1 bis 5, dadurch gekennzeichnet, daß man nach der Schwefelsäurebehandlung bis zu einem pH-Wert über 3, vorzugsweise über 4, wäscht.

7. Verfahren nach Anspruch 1 bis 6, dadurch gekennzeichnet, daß man als Alkalilauge Natronlauge verwendet.

8. Verfahren nach Anspruch 1 bis 7, dadurch gekennzeichnet, daß man eine 20- bis 40gewichtsprozentige Alkalilauge verwendet.

9. Verfahren nach Anspruch 1 bis 8, dadurch gekennzeichnet, daß man eine 40- bis 70gewichtsprozentige, vorzugsweise 50- bis 65gewichtsprozentige Schwefelsäure verwendet.

10. Verfahren nach Anspruch 1 bis 9, dadurch gekennzeichnet, daß man als Baumrinde Nadelholzrinde, vorzugsweise Kiefernrinde verwendet.

11. Verfahren nach Anspruch 1 bis 10, dadurch gekennzeichnet, daß man die Rinde auf eine Teilchengröße mit einem mittleren Teilchendurchmesser von 0,5 bis 5, vorzugsweise 1 bis 3 mm zerkleinert.

12. Verwendung eines nach Anspruch 1 bis 11 hergestellten Kationenaustauschers zur Abwasserreinigung.

## Claims

1. A process for preparing a cation exchanger, especially for the treatment of waste water, characterized in that comminuted bark is first treated with a 5 percent by weight alkali metal caustic solution, then washed with water, subsequently treated with a 30 to 75 percent by weight sulfuric acid and finally washed again with water.

2. Process according to claim 1, characterized in that there is treated with an amount of alkali metal caustic solution or sulfuric acid, respectively, covering the comminuted bark.

3. Process according to claim 1 and 2, characterized in that there is treated with the alkali metal caustic solution during 0,5 to 20, preferably 3 to 10 hours.

4. Process according to claim 1 to 3, characterized in that there is treated with the sulfuric acid during 0,5 to 8, preferably 1 to 6 hours.

5. Process according to claims 1 to 4, characterized in that there is washed after the treatment with alkali metal caustic solution to obtain a pH value below 9.

6. Process according to claims 1 to 5, characterized in that there is washed after the treatment with sulfuric acid to obtain a pH value above 3, preferably above 4.

7. Process according to claims 1 to 6, characterized in that as alkali metal caustic solution caustic soda is used.

8. Process according to claims 1 to 7, characterized in that a 20 to 40 percent by weight alkali metal caustic solution is used.

9. Process according to claims 1 to 8, characterized in that a 40 to 70 percent by weight, preferably 50 to 65 percent by weight sulfuric acid is used.

10. Process according to claims 1 to 9, characterized in that as bark conifer bark, preferably pine bark is used.

11. Process according to claims 1 to 10, characterized in that the bark is comminuted to a particle size having an average particle diameter of from 0,5 to 5, preferably of from 1 to 3 millimeters.

12. Use of a cation exchanger prepared according to the claims 1 to 11 for the treatment of waste water.

## Revendications

1. Procédé de fabrication d'un échangeur de cations, en particulier pour le traitement des eaux résiduaires, caractérisé en ce que l'on traite tout d'abord de l'écorce d'arbre fragmentée par une solution d'alcali caustique à au moins 5% en poids, qu'ensuite on la lave à l'eau, puis qu'on la traite par de l'acide sulfurique à 30 à 75% en poids et qu'enfin on la lave à nouveau à l'eau.

2. Procédé selon la revendication 1, caractérisé en ce que dans chaque cas, on traite l'écorce d'arbre fragmentée par une quantité d'alcali caustique et d'acide sulfurique respectivement qui recouvre l'écorce.

3. Procédé selon les revendications 1 et 2, caractérisé en ce que l'on traite par l'alcali caustique pendant 0,5 à 20, de préférence pendant 3 à 10 heures.

4. Procédé selon les revendications 1 à 3, caractérisé en ce que l'on traite par l'acide sulfurique pendant 0,5 à 8, de préférence pendant 1 à 6 heures.

5. Procédé selon les revendications 1 à 4, caractérisé en ce qu'après le traitement par l'alcali caustique, on lave jusqu'à un pH inférieur à 9.

6. Procédé selon les revendications 1 à 5, caractérisé en ce qu'après le traitement par l'acide sulfurique, on lave jusqu'à un pH supérieur à 3, de préférence supérieur à 4.

7. Procédé selon les revendications 1 à 6, caractérisé en ce que l'on emploie comme alcali caustique une solution de soude caustique.

8. Procédé selon les revendications 1 à 7, caractérisé en ce que l'on emploie une solution d'alcali caustique à 20 à 40% en poids.

9. Procédé selon les revendications 1 à 8, caractérisé en ce que l'on emploie une solution d'acide sulfurique à 40 à 70% en poids, de préférence à 50 à 65% en poids.

10. Procédé selon les revendications 1 à 9, caractérisé en ce que l'on emploie comme écorce d'arbre de l'écorce de conifères, de préférence de l'écorce de pin.

11. Procédé selon les revendications 1 à 10, caractérisé en ce que l'on fragmente l'écorce jusqu'à une dimension de particules correspondant à un diamètre de particules moyen de 0,5 à 5, de préférence de 1 à 3 mm.

12. Emploi d'un échangeur de cations fabriqué selon les revendications 1 à 11 pour l'épuration des eaux résiduaires.

# Fig.1

Cu$^{2+}$-Konzentration in behandeltem Abwasser als Funktion des Behandlungsvolumens

# Fi g.2

Proteinkonzentration in behandeltem Abwasser als Funktion des Volumens (die mittlere Konzentration von 0,21 g/l nach erfolgtem Ionenaustausch ist durch einen waagerechten Strich markiert.)

0 054 777